(19) Europäisches Patentamt
European Patent Office
Office européen des brevets

(11) **EP 4 621 646 A1**

(12) **EUROPEAN PATENT APPLICATION**

(43) Date of publication:
**24.09.2025 Bulletin 2025/39**

(21) Application number: **24305422.8**

(22) Date of filing: **21.03.2024**

(51) International Patent Classification (IPC):
**G06N 3/045** (2023.01)     **G06N 3/0455** (2023.01)
**G06N 3/086** (2023.01)     **G06N 3/0985** (2023.01)
**G06N 3/0464** (2023.01)     **G06N 20/00** (2019.01)

(52) Cooperative Patent Classification (CPC):
**G06N 3/0455; G06N 3/086; G06N 3/0985;**
**G06T 9/002;** G06N 3/0464; G06N 20/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **SCHNITZLER, Francois**
  **56890 SAINT AVE (FR)**
• **LAMBERT, Anne**
  **35250 SAINT-AUBIN-D'AUBIGNE (FR)**
• **DAMODARAN, Bharath Bhushan**
  **56000 VANNES (FR)**
• **LE MEUR, Olivier**
  **35160 TALENSAC (FR)**

(74) Representative: **Interdigital**
  **Immeuble ZEN 2**
  **845 A, avenue des Champs Blancs**
  **35510 Cesson-Sévigné (FR)**

(54) **FINE-TUNING A SELECTED SET OF SUBNETWORKS IN A DEEP CODING SYSTEM FOR IMAGES**

(57) A deep neural network-based coding system for images selects a set of subnetworks of a deep neural network model for decoding an input image and fine-tunes the selected subnetworks for a specific image or video. Weights of the selected set of subnetworks are optimized. An embedding corresponding to the input image is determined by a deep neural network model for encoding. The embedding, an information representing the set of selected subnetworks and the optimized weights are encoded and provided to a decoder. The decoder selects a set of subnetworks of a deep neural network model based on the information representing the set of selected subnetworks and replaces weights of the selected set of subnetworks by the optimized weights. An output image is reconstructed using the updated deep neural network model. A variant implementation applies the principle to loop filters of a video coding system. In this variant, the deep neural network decoder model is a loop filter, the input of the updated deep neural network decoder is an image patch and the output computed is a modified image patch.

Figure 5

EP 4 621 646 A1

**Description**

TECHNICAL FIELD

At least one of the present embodiments generally relates to neural network-based image compression and more particularly to the fine-tuning of a selected set of subnetworks of a deep decoder.

BACKGROUND

Image and video compression is a fundamental task in image processing, which has become crucial in the time of pandemic and increasing video streaming. Thanks to the community's huge efforts for decades, traditional methods dominate current video codecs solutions. End-to-end trainable deep models have recently emerged as an alternative, with promising results. They now beat the best traditional compressing method (e.g.: VVC, versatile video coding) even in terms of peak signal-to-noise ratio for single image compression.

SUMMARY

According to a first aspect of at least one embodiment, a method comprises selecting a set of subnetworks for a model of a deep neural network decoder based on input data, fine-tuning weights of the selected subnetworks for the model, and generating encoded data comprising at least an information representing the selected subnetworks, weights of the selected subnetworks.

According to a second aspect of at least one embodiment, a method comprises extracting an information representing selected subnetworks, weights of the selected subnetworks from encoded data, selecting a set of subnetworks of a model of a deep neural network decoder based on the information representing selected subnetworks, updating the model of the deep neural network decoder by setting weights of the selected set subnetworks of the model of the deep neural network decoder to the extracted weights, and computing an output using the updated deep neural network decoder.

According to a third aspect of at least one embodiment, an apparatus comprises electronic circuitry configured to select a set of subnetworks for a model of a deep neural network decoder based on input data, fine-tune weights of the selected subnetworks for the model, and generate encoded data comprising at least an information representing the selected subnetworks, and weights of the selected subnetworks.

According to a fourth aspect of at least one embodiment, an apparatus comprises electronic circuitry configured to extract an information representing selected subnetworks, weights of the selected subnetworks from encoded data, selecting a set of subnetworks of a model of a deep neural network decoder based on the information representing selected subnetworks, update the model of the deep neural network decoder by setting weights of the selected set subnetworks of the model of the deep neural network decoder to the extracted weights, and compute an output using the updated deep neural network decoder

According to a fifth aspect of at least one embodiment, a computer program comprising program code instructions executable by a processor is presented, the computer program implementing the steps of a method according to at least the first or second aspect when executed on a processor.

According to a sixth aspect of at least one embodiment, a non-transitory computer readable medium comprising program code instructions executable by a processor is presented, the instructions implementing the steps of a method according to at least the first or second aspect when executed on a processor.

BRIEF DESCRIPTION OF THE DRAWINGS

Figure 1 illustrates a block diagram of an example of a system in which various aspects and embodiments are implemented.

Figure 2 illustrates an example of end-to-end neural network based compression system for encoding an image using a deep neural network.

Figure 3 illustrates an example of flowchart for an encoding method according to at least one embodiment.

Figure 4 illustrates an example of flowchart for a decoding method according to at least one embodiment.

Figure 5 illustrates an example of deep network based end-to-end system for media distribution according to at least one embodiment.

DETAILED DESCRIPTION

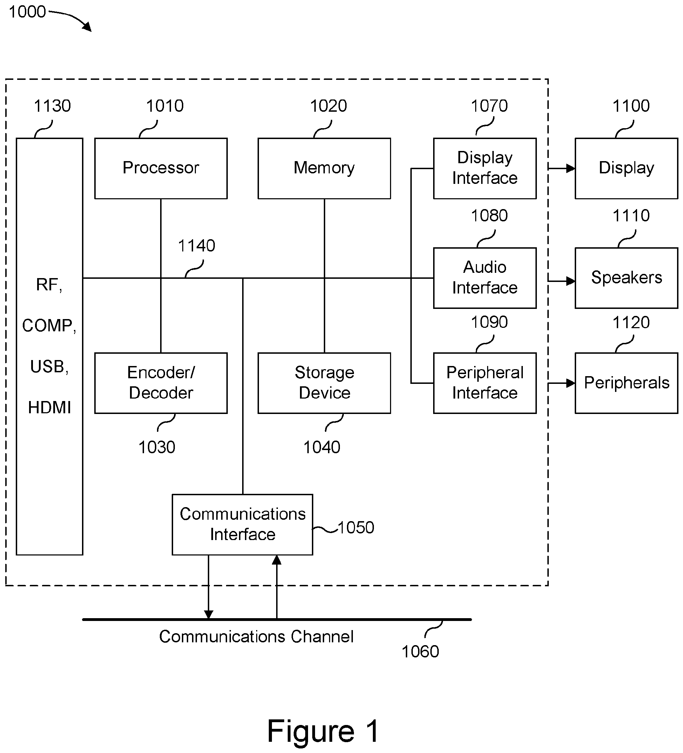

**Figure** 1 illustrates a block diagram of an example of a system in which various aspects and embodiments are implemented. System 1000 can be embodied as a device including the various components described below and may be configured to perform one or more of the aspects described in this application. Examples of such devices include, but are not limited to, various electronic devices such as personal computers, laptop computers, smartphones, tablet computers, digital multimedia set top boxes, digital television receivers, personal video recording systems, connected home appliances, vehicle entertainment systems, vehicle control systems, encoders, transcoders, and servers. Elements of system 1000, singly or in combination, can be embodied in a single integrated circuit, multiple ICs, and/or discrete components. For example, in at least one embodiment, the processing and encoder/decoder elements of system 1000 are distributed across multiple ICs and/or discrete components. In various embodiments, the system 1000 is communicatively coupled to other similar systems, or to other electronic devices, via, for example, a communications bus or through dedicated input and/or output ports. In various embodiments, the system 1000 is configured to implement one or more of the aspects described in this document.

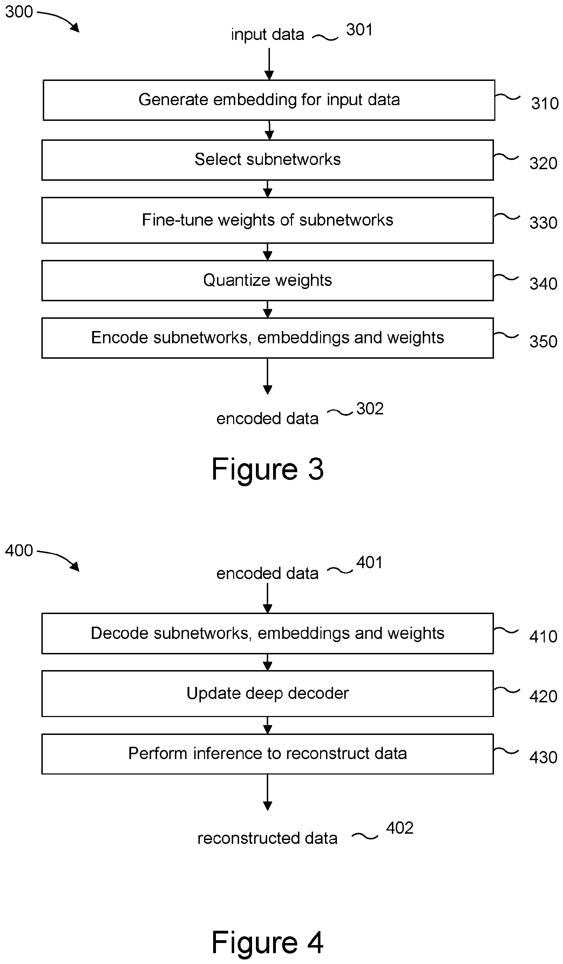

The system 1000 includes at least one processor 1010 configured to execute instructions loaded therein for implementing, for example, the various aspects described in this document such as the encoding method of figure 3 or the decoding method of figure 4. The processor 1010 may be any type of electronic circuitry such as a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, an integrated circuit (IC), a state machine, and the like. The system 1000 includes at least one memory 1020 (e.g., a volatile memory device, and/or a non-volatile memory device). System 1000 includes a storage device 1040, which can include non-volatile memory and/or volatile memory, including, but not limited to, EEPROM, ROM, PROM, RAM, DRAM, SRAM, flash, magnetic disk drive, and/or optical disk drive. The storage device 1040 can include an internal storage device, an attached storage device, and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video, or portions of the decoded video, the bitstream, matrices, variables, and intermediate or final results from the processing of equations, formulas, operations, and operational logic.

In several embodiments, memory inside of the processor 1010 and/or the encoder/decoder module 1030 is used to store instructions and to provide working memory for processing that is needed during encoding or decoding. In other embodiments, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 1000 can be provided through various input devices as indicated in block 1130. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 1130 have associated respective input processing elements as known in the art. For example, the RF portion can be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down-converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the I2C bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed to the system 1000, in various embodiments, using a Wi-Fi network such as IEEE 802.11. The Wi-Fi signal of these embodiments is received over the communications channel 1060 and the communications interface 1050 which are adapted for Wi-Fi communications. The communications channel 1060 of these embodiments is typically connected to an access point or router that provides access to outside networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130.

The system 1000 can provide an output signal to various output devices, including a display 1100, speakers 1110, and other peripheral devices 1120. The other peripheral devices 1120 include, in various examples of embodiments, one or more of a stand-alone DVR, a disk player, a stereo system, a lighting system, and other devices that provide a function based on the output of the system 1000. In various embodiments, control signals are communicated between the system 1000 and the display 1100, speakers 1110, or other peripheral devices 1120 using signaling such as AV.Link, CEC, or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs. The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

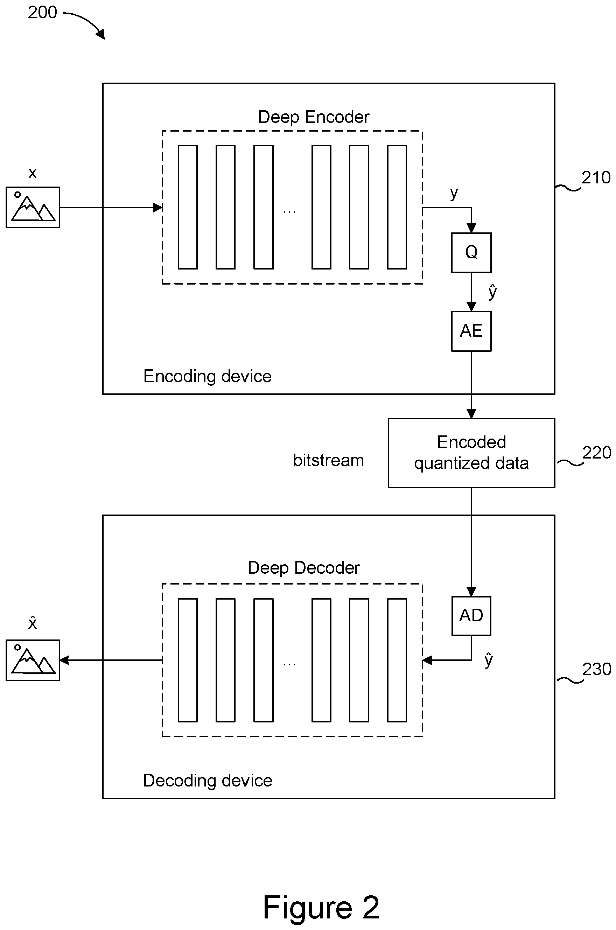

**Figure** 2 illustrates an example of end-to-end neural network based compression system for encoding an image using a deep neural network. In such system 200, an input image to be compressed, *x*, is first processed in an encoding device 210 by a deep neural network encoder (hereafter identified as deep encoder or encoder). The output of the encoder, *y*, is called the embedding of the image. This embedding is converted into a bitstream 220 by going through a quantizer Q, and then through an arithmetic encoder AE. The resulting bitstream 220 is provided to a decoding device 230 and is decoded by going through an arithmetic decoder AD to reconstruct the quantized embedding *y*. The reconstructed quantized embedding *y* is then processed by a deep neural network decoder (hereafter identified as deep decoder or decoder and sometimes referred to as an inference engine) to infer (i.e. to determine or reconstruct) the decompressed image $\hat{x}$ corresponding to the input image *x*.

The deep encoder and decoder are composed of multiple neural layers, such as convolutional layers. Each neural layer can be described as a function that first multiplies the input by a tensor, adds a vector called the bias and then applies a nonlinear function on the resulting values. The characteristics of the tensor and the type of non-linear functions are called the architecture of the network. The values of the tensor and the bias are denoted by the term "weights". The weights and, if applicable, the parameters of the non-linear functions, are called the parameters of the network. The architecture and the parameters define a "model". Typically, the encoder and decoder are fixed, based on a predetermined model supposed to be known when encoding and decoding. The layers of the decoder are denoted as $l_1, \dots l_i, \dots, l_n$ and the parameters of the decoder are denoted by $\theta$. The encoder and the decoder models are for example trained simultaneously so that they are compatible. Together, they are sometimes called an "autoencoder", a model that encodes an input and then reconstructs it. The architecture of the decoder is typically mostly the reverse of the encoder, although some layers or their ordering can be slightly different.

Many end-to-end architectures have been proposed. Typically, they are more complex than the one illustrated in Figure 1, but they all retain the deep encoder and decoder. State of the art models can compete with traditional video codecs such as Versatile Video Coding (VVC) in terms of rate-distortion tradeoffs.

A model *M* can be trained on massive databases D of images to learn the weights of the encoder and decoder. Typically, the weights are optimized to minimize a training loss, for example expressed as:

$$L_T(M, D) \ = E_{x \sim D}[-\log(p_M(\hat{y})) + \lambda d(x, \hat{x})],$$

where $p_M$ denotes the probability of the quantized embedding according to *M* (thus this term is the theoretical lower bound on bitstream size for the encoded quantized embeddings), *d*(.,.) a measure of the distortion between the original and the reconstructed image (for example the mean square error, Multi-Scale Structural Similarity Index Measure (MS-SSIM), Information Weighted Structural Similarity Index Measure (IWSSIM), Video Multimethod Assessment Fusion (VMAF), Visual Information Fidelity (VIF), Peak Signal to Noise Ratio Human Visual System Modified (PSNR-HVS-M), Normalized Laplacian Pyramid Distance (NLPD) or Feature Similarity Index Measure (FSIM) ) and $\lambda$ a parameter controlling the trade-off between the rate (r) and distortion (d) terms.

Typically, an architecture is trained several times, using different values for $\lambda$, to yield a set of models $\{M_i\}$ with different rate/distortion (r/d) trade-offs. Usually, different architectures yield models with different r/d points. To compare these architectures, the r/d points of each architecture are interpolated, resulting in a function d(r) for each architecture that provides a distortion estimate for any rate value.

In other approaches that are closer to Implicit Neural Representations (INR), the deep decoder *M* may be trained directly without a deep encoder. In that case, the input of the deep decoder may be a combination of pixel coordinates, frame coordinates and latent vector/embedding. That latent vector/embedding for a signal or a part of a signal may also depend on the pixel and/or frame coordinate. For example, the embedding may be obtained from the coordinates using a look-up table, a linear interpolation of embeddings mapped to a grid defined over admissible coordinates or through a hash-function. In that case, and when applicable, the embedding is directly computed without using a deep encoder.

The deep decoder can decode any type of image. In other words, it performs well on average for all images, but it is likely to be suboptimal for any single image. Improving the rate distortion trade-off for a single video or image may be done by retraining the deep decoder specifically for this video and by transmitting weight updates $\delta$ for the deep decoder in addition to the quantized embeddings for intra frames of the video. Before decoding the quantized embedding, $\delta$ is added to $\theta$. This approach did not achieve rate distortion improvements for single images because of the increased code size due to the inclusion of the weights updates. The loss used for fine tuning can for example be:

$$L_{FT}(M, \delta, x) = -\log(p_{\Delta}(\delta)) + \beta \, d(x, \hat{x}(\delta)),$$

where $p_{\Delta}(.)$ denotes a probability density over weight updates, $\hat{x}(\delta)$ the image reconstructed by the deep decoder whose weights have been updated by $\delta$ and $\beta$ a trade-off between the two losses. An additional term may be added to the loss to enforce a global sparsity constraint on $\delta$, so that a lot of weight updates have the same value (i.e., 0), to make encoding more efficient.

In this case, decoding the image is a two-step process. The deep decoder is first updated with the weight updates. Then $\hat{y}$ is decoded by the updated decoder.

In one example of approach, it is proposed to update either a fixed subset of weights for all images or a subset of weights specific for each image. In the latter case, the weights updated should be identified, for example in the bitstream. Both approaches allow fine tuning the deep decoder for single images.

Alternatively, a deep decoder may be improved by modifying its architecture to add small subnetworks in various locations rather than modifying the weights of the deep decoder. The weights of these subnetworks are then fine-tuned based on a specific image or video and encoded in the bitstream. As these subnetworks are small, this can reduce the number of weights to encode and thus the length of the bitstream. As an example, the subnetwork is typically computed in parallel to one or more layers of the deep decoder and its output(s) is (are) combined with the output(s) of these layers. The combination can for example be an addition, a multiplication or a weighted average. The subnetworks combined with the output of the layers $l_1, \dots l_i, \dots , l_n$ is hereafter denoted by $S = \{s_1, \dots s_i, \dots , s_n\}$. Some layers may also have no associated subnetworks. Such subnetworks are for example trained by optimizing the following loss function:

$$L_{FT}(M, \sigma, x) = -\log\big(p_\Delta(\sigma)\big) + \beta\, d(x, \hat{x}_s(\sigma)),$$

where $p_\Delta(.)$ denotes a probability density over the subnetwork weights, $\hat{x}_s(\sigma)$ the image reconstructed by the deep decoder augmented by the subnetworks $S$ parameterized by $\sigma$ and $\beta$ a trade-off between the two losses.

This approach of fine-tuning the deep decoder with small subnetworks leads to an improved performance in terms of rate-distortion for encoding a video. However, this approach includes a fixed set of subnetworks and thus is not able to adapt to the diverse complexity of a specific content. If the number of subnetworks is large, contents close to the distribution of the data used to train the decoder will be encoded with too many bits. If the number of subnetworks is small, contents far from the distribution of the data used to train the decoder will not be well reconstructed.

Embodiments described hereafter have been designed with the foregoing in mind and are based on adaptively selecting a subset of subnetworks to be added to the deep decoder and to fine-tune these subnetworks for a specific image or video. More particularly, in at least one embodiment, the encoder selects a subset of subnetworks $S' \subset S$ to augment the decoder network and only use these subnetworks. Only the parameters $\sigma' \subset \sigma$ of the selected subnetworks are fine tuned. The necessary information may be carried in an encoded bitstream. The decoder extracts from the encoded bitstream the elements allowing to update the deep decoder and decode the signal. At least one embodiment is related to the encoding procedure and how to select the optimal subset of subnetworks. At least one embodiment is related to the decoding procedure and how to fine-tune the deep decoder of selected subnetworks to decode the signal.

In a variant embodiment, this principle is applied to loop filters of a video coding system. In this variant, the deep neural network decoder model is a loop filter, the input of the updated deep neural network decoder is an image patch and the output computed is a modified image patch.

In embodiments, these principles may be applied to 2D images or frames of a video, to intermediate steps of a conventional video encoder/decoder (for example: neural networks used in loop filters), or other types of media such as a 3D scene, meshes, point clouds, a 360° image, a holographic image, or in other context such as cellular communications.

End-to-end compression techniques are evolving quickly and in terms of results those techniques start to be competitive with traditional compression. Neural network-based compression is also being used to enhance traditional compression. The proposed embodiments may be used both for end-to-end video compression or to improve neural network models used in traditional compression, even as new architectures are proposed, since the embodiments do not depend on a specific neural architectures.

**Figure 3** illustrates an example of flowchart for an encoding method according to at least one embodiment. This encoding method 300 is for example implemented in the device 1000 of figure 1 and the method is for example executed by the processor 1010 or the encoder 1030.

In step 310, the process determines an embedding, for an input image $x$ obtained from an input data 301, using the deep neural network encoder model.

In step 320, the process selects a subset of subnetworks of the deep neural network decoder model to be fine-tuned by using a first fine-tuning algorithm to solve the following combinatorial optimization problem to:

$$S^* = \arg\max_{S' \in \Omega} L_{FT}(M, \sigma_{S'}, x)$$

where $\Omega$ denotes the set of all subsets $S' \subset S$ of the deep decoder, $\sigma_S$, the weights corresponding to the subnetworks $S'$ of the deep decoder, $L_{FT}$ represent the fine-tuning loss and $M$ the deep network model of the deep decoder and $x$ the input image. This is a combinatorial optimization problem and any exact or approximate method to solve such a problem can be used here. Examples include greedy search, genetic algorithms, simulated annealing, machine learning algorithms.

In step 330, the processor optimizes weights of the selected subnetworks by using a second fine-tuning algorithm. The resulting weights are denoted by $\sigma_{S^*}^*$. These weights are for example fine-tuned by minimizing the following loss function:

$$L_{FT}(M, \sigma_{S^*}, x) = -\log\big(p_\Delta(\sigma)\big) + \beta\, d(x, \hat{x}_{S^*}(\sigma_{S^*})).$$

where $p_\Delta(.)$ denotes a probability density over the subnetwork weights, $\hat{x}_{S^*}(\sigma_{S^*})$ the image reconstructed by the deep decoder augmented by the selected set of subnetworks $S^*$ parameterized by $\sigma$ and $\beta$ a trade-off between the two losses, $L_{FT}$ represent the fine-tuning loss and $M$ the model of the deep neural network decoder and $x$ the input image.

This optimization is typically solved by a gradient descent algorithm but any optimization method can be used including greedy search, genetic algorithms, machine learning-based approaches etc.

Note that these steps 320 and 330 can happen completely or partially at the same time, as estimating the performance of S' typically involves estimating the best value of $\sigma_{S'}$.

In step 340, the processor performs a quantization of these weights. The result is denoted by $\hat{\sigma}_{S^*}^*$. This step can also be performed jointly with the former step.

In step 350, the processor encodes an information representing a selection of subnetworks, the quantized weights, and the quantized embeddings, generating encoded data 302. This encoded data may then be distributed to a decoding device, for example by providing a bitstream or a file comprising the encoded data.

Thus, the resulting bitstream encoding the image will contain an identifier of the selected subset of subnetworks $S^*$, the quantized weights $\hat{\sigma}_{S^*}^*$, and the quantized embeddings $\hat{y}$. Several options are possible for encoding the selected subset of subnetworks $S^*$, such as an index of $S^*$ in an order defined over $\Omega$, or the indexes of the ordered set of subnetworks $s_1, ..., s_m$ included in $S^*$, for example the indexes {1,3} when $S^* = \{s_1, s_3\}$. All these elements may be encoded using an arithmetic encoder or another type of encoder. These two or three elements may be arranged in any order or even interleaved in the bitstream.

In a variant, the combinations of subnetworks that can be selected may be restricted to a subset $\Omega' \subset \Omega$. In that case, the process described above is performed using $\Omega'$ instead of $\Omega$.

In a variant, the input of the neural network is given and not computed by the embodiment. For example, the quantized embedding $\hat{y}$ may have been computed earlier and recovered from storage. As another example, in neural network-based loop-filters, the input of the network can be an image patch $\hat{y}$ that is provided by a traditional decoder and therefore no embedding is generated.

In another variant of this embodiment, the quantized embedding $\hat{y}$ can be fine-tuned and/or quantized jointly with $\hat{\sigma}_{S^*}^*$. In that case, the bitstream remains the same but the loss may be:

$$L_{FT}(M, \hat{\sigma}_{S^*}^*, x) = -\log\big(p_\Delta(\hat{\sigma}_{S^*}^*)\big) - \log(p_M(\hat{y})) + \beta\, d(x, \hat{x}(\hat{\sigma}_{S^*}^*)).$$

**Figure 4** illustrates an example of flowchart for a decoding method according to at least one embodiment. This decoding method 400 is for example implemented in the device 1000 of figure 1 and the method is for example executed by the processor 1010 or the decoder 1030.

In step 410, the processor decodes from encoded data 401 quantized embeddings, an information representing a selection of subnetworks and quantized weights.

In step 420, the processor updates the deep decoder based on the decoded selection of subnetworks and quantized weights. In other words, the processor selects a subset of the subnetworks of the model of the deep decoder according to the information representing a selection of subnetworks and replaces the weights of this subset of subnetworks by the (dequantized) weights obtained from the encoded data.

In step 430, the processor performs inference of the quantized embedding using the updated deep decoder and thus reconstructs the data 402, for example an image. Step 430 is similar to the decoding of an image by an unmodified deep decoder.

In an embodiment applying the principle to neural network-based loop-filters, the input of the network can be an image patch that is provided by a traditional decoder and therefore no quantized embedding is decoded from the encoded data.

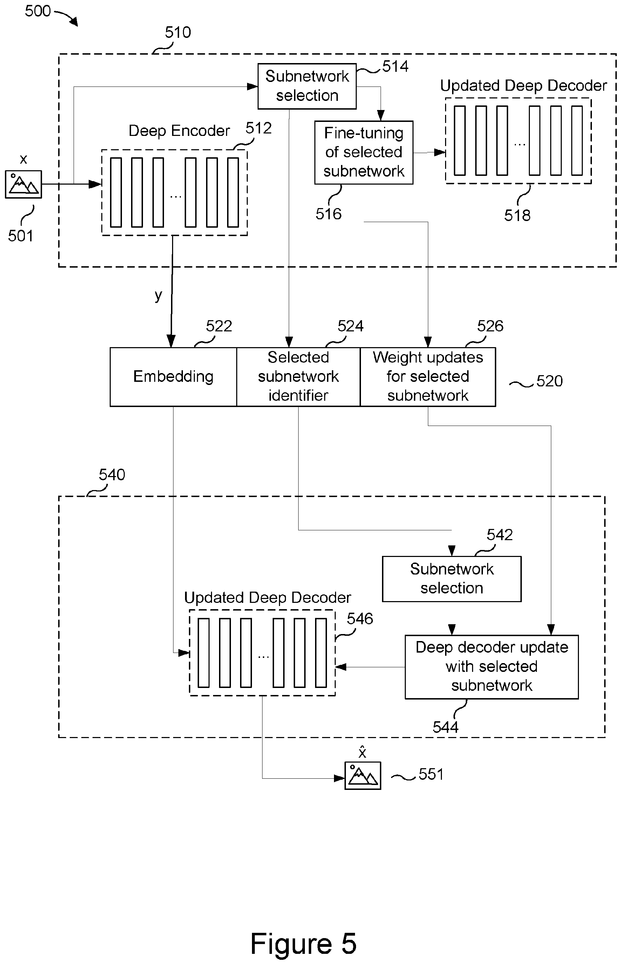

**Figure 5** illustrates an example of deep network based end-to-end system for media distribution according to at least one embodiment. The system 500 comprises an encoder 510 and a decoder 540. The encoder 510 generates encoded data 520 representing an input media such as an image 501. The encoded data 520 are conveyed to the decoder 540 that reconstructs an output media, for example the image 551. The system aims at providing an output image that is perceptually identical to the input image with a size of the encoded data much smaller than the size of the input media. The encoder 510 and decoder 540 are for example implemented in the device 1000 of figure 1 and the operations are for example executed by the processor 1010 or the encoder/decoder 1030. The encoder first obtains the input media, for example the image 501. The image is encoded using the deep encoder 512 and the corresponding embedding 522 is generated. The encoder selects (514) a set of subnetworks to be fine-tuned and determines the weight updates 526 for the selected subset of subnetworks by using a fine-tuning algorithm 516, for example as described in relation with Figure 3. These operations are based on the input image 501 and may also be based on the embedding 522 and/or a reconstructed image. This will allow to update the model of the deep decoder to improve the decoding, thus leading to an updated deep decoder (518, 546).

Data corresponding to the image 501 is packaged (not illustrated in the figure), for example by performing a quantization and an arithmetic encoding (or another type of encoding), thus resulting into encoded data 520. Encoded data 520 may comprise the embedding 522, means to identify the selected set of subnetworks 524 and weight updates for the selected set of selected subnetworks. As described above, the means to identify the selected set of subnetworks can be implemented using different methods, such as listing indexes of subnetworks to be selected in an indexed list of possible subnetworks of the deep network model.

On the decoder side, the embedding 522, means to identify the selected set of subnetworks 524 and weight updates 526 for the selected set of selected subnetworks are extracted from the encoded data 520. The decoder selects (542) the set of subnetworks to be fine-tuned, based on the means to identify the selected set of subnetworks 524. The selected set of subnetworks is then updated (544) based on the weight updates 526. This results in an updated deep decoder 546 that allows to reconstruct an output image 551.

Reference to "one embodiment" or "an embodiment" or "one implementation" or "an implementation", as well as other variations thereof, mean that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, moving the information, copying the information, calculating the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory or optical media storage). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1.  A method comprising:

    - selecting a set of subnetworks for a model of a deep neural network decoder based on input data;
    - fine-tuning weights of the selected subnetworks for the model; and
    - generating encoded data comprising at least an information representing the selected subnetworks, weights of the selected subnetworks.

2.  The method of claim 1, where the input data is an image patch and the deep neural network decoder model is a loop filter of a video coding system.

3.  The method of claim 1, wherein the generated encoded data comprises an embedding of the input data obtained using the deep neural network and further comprising generating an embedding using a deep neural network encoder model based on input data.

4.  The method of claim 1, wherein the information representing the selected subnetworks comprises a set of indexes of the subnetworks in an ordered set of subnetworks of the model of the deep neural network decoder.

5.  The method of claim 1, wherein selecting the set of subnetworks is done by solving a combinatorial optimization problem expressed by:

$$S^* = \arg\max_{S' \in \Omega} L_{FT}(M, \sigma_{S'}, x)$$

    where $\Omega$ denotes a set of all subsets $S' \subset S$ of the model of the deep neural network decoder, $\sigma_{S'}$ the weights corresponding to a subnetworks $S'$ of the deep model of the deep neural network decoder, $L_{FT}$ represents a fine-tuning loss and $M$ the model of the deep neural network decoder and $x$ the input data.

6.  The method of claim 1, wherein the fine-tuning is done by minimizing the following loss function:

$$L_{FT}(M, \sigma_{S^*}, x) = -\log(p_\Delta(\sigma)) + \beta \, d(x, \hat{x}_{S^*}(\sigma_{S^*}))$$

    where $p_\Delta(.)$ denotes a probability density over the subnetwork weights, $\hat{x}_{S^*}(\sigma_{S^*})$ the image reconstructed by the deep decoder augmented by the selected set of subnetworks $S^*$ parameterized by $\sigma$ and $\beta$ a trade-off between the two losses, $L_{FT}$ represent the fine-tuning loss and M the model of the deep neural network decoder and $x$ the input data.

7.  The method of claim 4, wherein minimizing the loss function is performed by a fine-tuning gradient descent algorithm, a greedy search, a genetic algorithm, or a machine learning-based approach.

8.  A method comprising:

    - extracting information representing selected subnetworks and weights of the selected subnetworks from encoded data;
    - selecting a set of subnetworks of a model of a deep neural network decoder based on the information representing selected subnetworks;
    - updating the model of the deep neural network decoder by setting weights of the selected set of subnetworks of the model of the deep neural network decoder to the extracted weights; and
    - computing an output using the updated deep neural network decoder.

9.  The method of claim 8, wherein the deep neural network decoder model is a loop filter of a video coding system, wherein an input of the updated deep neural network decoder is an image patch and an output is a modified image patch.

10. The method of claim 8, further comprising extracting an embedding of an input data, and wherein the embedding is used by the updated deep neural network decoder to reconstruct the input data.

11. The method of claim 10, wherein the input data is a 2D image, or other types of media such as a 3D scene, meshes, point clouds, a 360° image, or a holographic image.

12. A device comprising electronic circuitry configured to:

   - select a set of subnetworks for a model of a deep neural network decoder based on input data;
   - fine-tune weights of the selected subnetworks for the model; and
   - generate encoded data comprising at least an information representing the selected subnetworks, weights of the selected subnetworks.

13. A device comprising electronic circuitry configured to:

   - extract an information representing selected subnetworks and weights of the selected subnetworks from encoded data;
   - select a set of subnetworks of a model of a deep neural network decoder based on the information representing selected subnetworks;
   - update the model of the deep neural network decoder by setting weights of the selected set subnetworks of the model of the deep neural network decoder to the extracted weights; and
   - compute an output using the updated deep neural network decoder.

14. Computer program comprising program code instructions for implementing the method according to at least one of claims 1 to 8 when executed by a processor.

15. Non-transitory computer readable medium comprising program code instructions for implementing the method according to at least one of claims 1 to 8 when executed by a processor.

Figure 1

200

Figure 2

300 ⟍

input data ⟿ 301

| Generate embedding for input data | ⟿ 310 |

| Select subnetworks | ⟿ 320 |

| Fine-tune weights of subnetworks | ⟿ 330 |

| Quantize weights | ⟿ 340 |

| Encode subnetworks, embeddings and weights | ⟿ 350 |

encoded data ⟿ 302

# Figure 3

400 ⟍

encoded data ⟿ 401

| Decode subnetworks, embeddings and weights | ⟿ 410 |

| Update deep decoder | ⟿ 420 |

| Perform inference to reconstruct data | ⟿ 430 |

reconstructed data ⟿ 402

# Figure 4

Figure 5

Europäisches
Patentamt

European
Patent Office

Office européen
des brevets

# EUROPEAN SEARCH REPORT

**Application Number**

EP 24 30 5422

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/002884 A1 (INTERDIGITAL CE PATENT HOLDINGS SAS [FR]) 4 January 2024 (2024-01-04) * p1-3, 6-8,11-12 * * figures 6-8 * | 1-15 | INV. G06N3/045 G06N3/0455 G06N3/086 G06N3/0985 |
| A | HU ZHIHAO ET AL: "Complexity-guided Slimmable Decoder for Efficient Deep Video Compression", 2023 IEEE/CVF CONFERENCE ON COMPUTER VISION AND PATTERN RECOGNITION (CVPR), IEEE, 17 June 2023 (2023-06-17), pages 14358-14367, XP034402460, DOI: 10.1109/CVPR52729.2023.01380 [retrieved on 2023-08-22] * 3.1-3.2 * * figure 1 (c) * | 1,8, 12-15 | ADD. G06N3/0464 G06N20/00 |

|  |
|---|
| **TECHNICAL FIELDS SEARCHED (IPC)** |
| G06T G06N |

The present search report has been drawn up for all claims

| Place of search | Date of completion of the search | Examiner |
|---|---|---|
| The Hague | 24 September 2024 | Veynachter, Alexis |

EPO FORM 1503 03.82 (P04C01)

**EP 4 621 646 A1**

## ANNEX TO THE EUROPEAN SEARCH REPORT
## ON EUROPEAN PATENT APPLICATION NO.

EP 24 30 5422

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | Publication date | Patent family member(s) | Publication date |
|---|---|---|---|
| WO 2024002884 A1 | 04-01-2024 | NONE | |

For more details about this annex : see Official Journal of the European Patent Office, No. 12/82

EPO FORM P0459

16